# EUROPEAN PATENT APPLICATION

(11) **EP 4 606 852 A1**
(43) Date of publication of application: **27.08.2025**
(21) Application number: 23879860.7
(22) Date of filing: 19.10.2023
(51) Int. Cl.: C08L 33/00, C08L 51/08, C08L 101/14, B24B 37/00, C09K 3/14, C08K 3/22

(54) **POLISHING AGENT COMPOSITION FOR PLASTIC LENS**

(30) Priority: 20.10.2022 JP 2022168375
(71) Applicant: Yamaguchi Seiken Kogyo Co., Ltd., Nagoya-shi, Aichi 459-8009 (JP)
(72) Inventor: GOTO, Yuji, Nagoya-shi, Aichi 459-8009 (JP)
(74) Representative: Kraus & Lederer PartGmbB
(86) International application number: PCT/JP2023/037826
(87) International publication number: WO 2024/085217

(57) **Abstract**

The polishing composition for a plastic lens contains alumina, a water-soluble polymer compound, and water, and the water-soluble polymer compound is an oxazoline group-containing water-soluble polymer compound in which an oxazoline group is bonded to a main chain of a polymer.

## Description

### BACKGROUND OF THE INVENTION

### TECHNICAL FIELD

The present invention relates to a polishing composition for a plastic lens.

### BACKGROUND ART

In recent years, plastic lenses using a resin material have been frequently used as optical lenses instead of glass lenses. The reason for this is that the plastic lens is lighter in weight, is less likely to crack, and is easier to process and mold than the glass lens. Although the plastic lens is widely used in the optical field, it is particularly used as a spectacle lens because of the above advantages.

Examples of a base material for the plastic lens include acrylic resins, polycarbonates, cycloolefin polymers, cycloolefin copolymers, and thiourethane resins. The acrylic resin (PMMA) is also called organic glass because of its excellent transparency and weatherability, good mechanical strength, and high surface hardness, and is widely used as an optical lens material because it transmits more light than glass and has lower refractive index. However, it has the disadvantage that the water absorption is high, the refractive index changes due to water absorption, and the thermal resistance is low.

In addition, a polycarbonate is a type of engineering plastics with high impact resistance, having transparency equivalent to that of glass and the next highest transparency after acrylic resin. The polycarbonate has excellent dimensional stability, but has the disadvantage of high birefringence. For example, polycarbonate-based allyl diglycol carbonate polymer is known as CR-39 (registered trademark) (manufactured by Pittsburgh Plate Glass Company, PPG Industries).

The cycloolefin polymer is a cyclic olefin polymer obtained by ring-opening polymerization of a monomer cyclopentadiene and stabilizing it by hydrogenation, has transparency equivalent to that of an acrylic resin, and has a minimum level of water absorption among plastics. Even under high humidity, it is excellent in dimensional stability and hardly warps or deforms the molded article, so it is suitable for precision molding.

The cycloolefin copolymer is a cyclic olefin copolymer which is a polymer obtained by addition polymerization of two monomers, norbornene and an ethylene unit, and has high rigidity, high transparency (transparency equivalent to that of an acrylic resin), high optical property (high transparency, low birefringence), and excellent properties as an optical component.

The thiourethane resin is a polymer obtained by reacting a polyisocyanate compound with a polythiol composition, and is widely used for high refractive index plastic lenses because of its high refractive index and excellent impact resistance. For example, MR-10 (registered trademark) (manufactured by Mitsui Chemicals, Inc.) and the like are known.

Various polishing compositions for a plastic lens for use in polishing these base materials for a plastic lens are conventionally well known to those skilled in the art. These known polishing compositions are generally composed of polishing particles dispersed in water and/or other liquids. Examples of such polishing particles include cerium oxide, aluminum oxide, zirconium oxide, tin oxide, silicon dioxide, and titanium oxide.

The aluminum oxide slurry is used as a polishing composition for a plastic lens for polishing the above-described base material for a plastic lens. In the case of a polishing composition for a plastic lens consisting of aluminum oxide polishing particles simply dispersed in water, when used to polish a base material for a plastic lens, acceptable surface quality may be exhibited while exhibiting unacceptably poor polishing efficiency. While such slurry compositions can improve polishing efficiency by using fairly large aluminium oxide particles, they result in unacceptable surface quality, i.e., scratches, pits, orange peel-like uneven pattern (orange peel), or similar defects.

For example, Patent Document 1 (U.S. Pat. No. 4225349) discloses that a polishing composition for a plastic lens comprising a calcined alumina (aluminum oxide particles) and an aluminum salt polishing accelerator, such as aluminum nitrate, dispersed in deionized water promotes polishing of a base material, CR-39 without impairing surface qualities.

On the other hand, Patent Document 2 (JP-A-2008-537704) proposes that a high polishing efficiency can be obtained by using an alumina-based polishing composition to which a pyrrolidone compound, polyvinylcaprolactam, or the like is added.

Furthermore, Patent Document 3 (JP-A-2018-533071) proposes that a high polishing efficiency can be obtained by using an alumina-based polishing composition to which a number of tertiary amide-containing compounds are added.

### CITATION LIST

### Patent Literature

Patent Document 1: U.S. Pat. No. 4225349
Patent Document 2: JP-A-2008-537704
Patent Document 3: JP-A-2018-533071

### SUMMARY OF INVENTION

### Technical Problem

Well-known polishing compositions for a plastic lens used for polishing low refractive index substrates, such as CR-39 and the like, have failed to provide adequate polishing efficiencies even under the condition in which a polishing accelerator such as aluminium nitrate is present, for example. It has been expected to develop a polishing composition for a plastic lens having high polishing efficiency even for a base material for a plastic lens (e.g., MR-10, etc.) such as thiourethane resin having higher refractive index.

In view of the above circumstances, an object of the present disclosure is to provide a polishing composition for a plastic lens capable of exhibiting high polishing efficiency for polishing a base material for a plastic lens such as polycarbonate or thiourethane resin.

### Means for Solving the Problems

In order to solve the above problems, the present inventors have intensively studied and found that, by using the following polishing composition for a plastic lens, it is possible to obtain highly polishing efficiency and a glossy surface shape for both base materials for a plastic lens with low refractive index and high refractive index.
[1] A polishing composition for a plastic lens, comprising alumina, a water-soluble polymer compound, and water, wherein the water-soluble polymer compound is an oxazoline group-containing water-soluble polymer compound in which an oxazoline group represented by Chemical Formula 1 below is bonded to a main chain of a polymer. 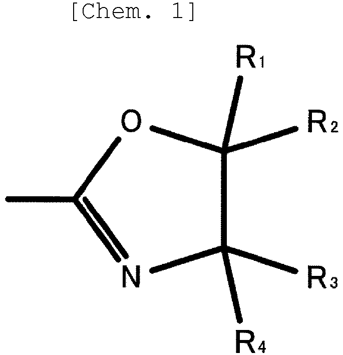 (In Chemical Formula 1, R₁, R₂, R₃, and R₄ are any one of H, CH₃, and CH₂CH₃.)
[2] The polishing composition for a plastic lens according to [1], wherein the oxazoline group-containing water-soluble polymer compound includes a structural unit derived from an acrylic monomer and a structural unit derived from an oxazoline group-containing monomer as essential structural units.
[3] The polishing composition for a plastic lens according to [2], wherein the acrylic monomer is at least one selected from the group consisting of acrylamide, methacrylamide, acrylic acid, acrylic acid salt, acrylic acid ester, methacrylic acid, methacrylic acid salt, and methacrylic acid ester.
[4] The polishing composition for a plastic lens according to [2], wherein the oxazoline group-containing monomer is at least one selected from the group consisting of 2-vinyl-2-oxazoline, 2-vinyl-4-methyl-2-oxazoline, 2-vinyl-5-methyl-2-oxazoline, 4,4-dimethyl-2-vinyl-2-oxazoline, 2-isopropenyl-2-oxazoline, 2-isopropenyl-4-methyl-2-oxazoline, 4,4-dimethyl-2-isopropenyl-2-oxazoline, 2-isopropenyl-5-methyl-2-oxazoline, 2-isopropenyl-5-ethyl-2-oxazoline.
[5] The polishing composition for a plastic lens according to [1], wherein the oxazoline group-containing water-soluble polymer compound is obtained by graft polymerization of an addition-polymerizable oxazoline to a polyether.
[6] The polishing composition for a plastic lens according to [1], wherein the oxazoline group-containing water-soluble polymer compound is obtained by reacting a polymer having a carboxyl group and/or an ester group with an amino alcohol.
[7] The polishing composition for a plastic lens according to any one of [1] to [6], further comprising dispersant.
[8] The polishing composition for a plastic lens according to any one of [1] to [6], wherein the pH at 25° C is 1.0 to 10.0.

### Advantageous Effects of Invention

The polishing composition for a plastic lens of the present invention contains alumina, a water-soluble polymer compound, and water, and in particular, the water-soluble polymer compound is an oxazoline group-containing water-soluble polymer compound, and by using the composition for polishing a plastic lens, the polishing rate can be improved, high polishing efficiency can be achieved, and the excellent effect of finishing the polished plastic lens to a glossy surface can be achieved.

### DESCRIPTION OF EMBODIMENTS

Hereinafter, embodiments of the present invention will be described. The present invention is not limited to the following embodiment, and changes, modifications, and improvements can be added without departing from the spirit of the invention.

### 1. Polishing composition for Plastic lens

A polishing composition for a plastic lens of the present invention (hereinafter, simply referred to as a "polishing composition") contains alumina, a water-soluble polymer compound, and water. Further, it may preferably contain dispersant. Hereinafter, the components of the polishing composition of an embodiment of the present invention will be described in detail.

### 1.1 Alumina

The alumina used in the polishing composition of the present embodiment may be any of α-alumina, intermediate alumina, and mixtures of α-alumina and intermediate alumina. Examples of the intermediate alumina include γ-alumina, δ-alumina, and θ-alumina.

In particular, α-alumina can be preferably used in polishing a base material for a plastic lens from the viewpoint of making the polishing rate as fast as possible.

Examples of the raw material for manufacturing alumina used in the polishing composition of the present embodiment include gibbsite: Al₂O₃·3H₂O, boehmite: Al₂O₃·H₂O, pseudo-boehmite: Al₂O₃·nH₂O (n=1 to 2), and the like. Furthermore, these alumina raw materials can be prepared, for example, in the following manner.

### Gibbsite: Al₂O₃·3H₂O

It is obtained by dissolving bauxite in a hot solution of sodium hydroxide, removing impurities by filtration, cooling the resulting solution and drying the resulting precipitate.

### Boehmite: A₂O₃·H₂O

It is obtained by hydrolyzing aluminum alkoxide: Al(OR)₃, which is obtained by reacting metallic aluminum with alcohol.

### Pseudo-boehmite: Al₂O₃·nH₂O (n=1 to 2)

It is obtained by treating gibbsite with steam under an alkaline atmosphere.

Further, the above-described alumina raw materials can be calcined or the like to obtain α-alumina, or intermediate alumina such as γ-alumina, δ-alumina, or θ-alumina.

The average particle size (D50) of the alumina used here is preferably 0.1 to 10.0µm, more preferably 0.1 to 5.0µm, still more preferably 0.2 to 2.0µm.

The concentration of alumina in the polishing composition of the present embodiment is preferably 1 to 50% by mass, more preferably 2 to 45% by mass, and still more preferably 3 to 40% by mass. If the concentration of the alumina is less than 1% by mass, a sufficient polishing rate cannot be obtained, whereas if the concentration of the alumina is more than 50% by mass, an improvement in the polishing rate is not recognized, which is not appropriate in consideration of the economical point.

### 1.2 Water-soluble polymer compound

The water-soluble polymer compound used in the polishing composition of the present embodiment has a characteristic of being an oxazoline group-containing water-soluble polymer compound in which an oxazoline group represented by Chemical Formula 1 below is bonded to a main chain of a polymer. In other words, a water-soluble polymer compound containing an oxazoline group having a five-membered ring structure having a carbon-nitrogen double bond is used.

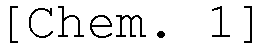

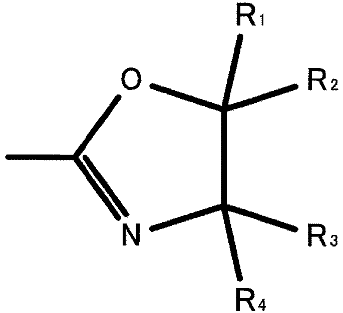

In Chemical Formula 1, R₁, R₂, R₃, and R₄ are any oof H, CH₃, and CH₂CH₃.

Here, the oxazoline group-containing water-soluble polymer compound can be obtained by various manufacturing methods known in the art. For example, the oxazoline group-containing water-soluble polymer compound can be obtained by radical copolymerization of an oxazoline group-containing monomer and another monomer. Further, the oxazoline group-containing water-soluble polymer compound may be obtained by graft-polymerizing an oxazoline group-containing monomer with respect to an existing polymer such as a polyether or an acrylic polymer. For example, the structural unit derived from the acrylic monomer and the structural unit derived from the oxazoline group-containing monomer may be an essential structural unit.

In addition, the oxazoline group-containing water-soluble polymer compound can be obtained by reacting a polymer having a carboxyl group and/or an ester group with an amino alcohol.

The oxazoline polymer obtained by ring-opening an oxazoline compound by cationic polymerization is a polymer having no carbon-nitrogen double bond described above, which is different from the water-soluble polymer compound containing an oxazoline group having a five-membered ring structure having a carbon-nitrogen double bond used in the polishing composition of the present invention. The above three manufacturing methods for obtaining the oxazoline group-containing water-soluble polymer compound will be specifically described below.

### 1.2.1 Method for obtaining Oxazoline group-containing water-soluble polymer compound by radical copolymerization of acrylic monomer and addition-polymerizable oxazoline

Specific examples of the addition-polymerizable oxazoline include 2-vinyl-2-oxazoline, 2-vinyl-4-methyl-2-oxazoline, 2-vinyl-5-methyl-2-oxazoline, 4,4-dimethyl-2-vinyl-2-oxazoline, 2-isopropenyl-2-oxazoline, 2-isopropenyl-4-methyl-2-oxazoline, 4,4-dimethyl-2-isopropenyl-2-oxazoline, 2-isopropenyl-5-methyl-2-oxazoline, and 2-isopropenyl-5-ethyl-2-oxazoline.

Specific examples of the acrylic monomer include acrylamide, methacrylamide, acrylic acid, acrylic acid salt, acrylic acid ester, methacrylic acid, methacrylic acid salt, and methacrylic acid ester. More specific examples thereof include acrylamide, methacrylamide, acrylic acid, acrylic acid sodium salt, acrylic acid potassium salt, acrylic acid ammonium salt, acrylic acid methyl ester, acrylic acid ethyl ester, methacrylic acid, methacrylic acid sodium salt, methacrylic acid potassium salt, methacrylic acid ammonium salt, methacrylic acid methyl ester, and methacrylic acid ethyl ester.

When the monomer component described above is radically polymerized, a polymerization initiator may be used. Examples of the polymerization initiator include azo compounds such as azobisisobutyronitrile, 2,2-azobis(2-methylbutyronitrile) and 2,2-azobis(2-diaminopropane) hydrochloride, persulfates such as ammonium persulfate, sodium persulfate, and potassium persulfate, and peroxides such as hydrogen peroxide, benzoyl peroxide, parachlorobenzoyl peroxide, and ammonium peroxide, and the polymerization initiator is not particularly limited.

Further, as the polymerization process, solution polymerization, bulk polymerization, suspension polymerization, or the like can be used, and in particular, solution polymerization using a mixed solvent of water and an organic solvent is preferable because the oxazoline group-containing polymer is a water-soluble polymer compound. Further suitable organic solvents include methyl alcohol, ethyl alcohol, n-propyl alcohol, isopropyl alcohol, methoxyethyl alcohol, ethoxyethyl alcohol, and methoxypropyl alcohol.

Here, the polymerization temperature at which the monomer component is polymerized is usually 20 to 150°C, and more preferably 60 to 95°C.

The atmosphere in which the monomer component is polymerized is not particularly limited, but is preferably an inert gas such as nitrogen gas from the viewpoint of enhancing the efficiency of the polymerization initiator.

### 1.2.2 Method for obtaining oxazoline group-containing water-soluble polymer compound by graft polymerization of polyether with addition-polymerizable oxazoline

Here, the polyether forms the main chain of the graft polymer, and may be a general polyether having a structural unit derived from an alkylene oxide, and it is preferable that the alkylene oxide contains ethylene oxide as an essential component from the viewpoint of water solubility of the graft polymer. The number average molecular weight of the polyether is preferably in the range of 200 to 100000. If it is less than 200, the molecular weight of the obtained graft polymer becomes low, and if it is more than 100000, the viscosity becomes high, which may make it difficult to handle the polyether in carrying out the graft polymerization.

Examples of the addition-polymerizable oxazoline include 2-vinyl-2-oxazoline, 2-vinyl-4-methyl-2-oxazoline, 2-vinyl-5-methyl-2-oxazoline, 4,4-dimethyl-2-vinyl-2-oxazoline, 2-isopropenyl-2-oxazoline, 2-isopropenyl-4-methyl-2-oxazoline, 4,4-dimethyl-2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

In the graft polymerization, a polymerization initiator is preferably used, and as the polymerization initiator, an organic peroxide is preferably used. Examples of the organic peroxide include methyl ethyl ketone peroxide, cyclohexanone peroxide, t-butyl hydroperoxide, and cumene hydroperoxide.

When the graft polymerization is carried out using the reaction solvent, isobutyl alcohol, n-butylalcohol, t-butylalcohol, ethylene glycol, diethylene glycol, and the like can be used as the reaction solvent.

The polymerization temperature in carrying out the graft polymerization is not particularly limited, but is preferably 20 to 160°C. If the temperature is lower than 20°C, the graft polymerization is less likely to proceed, and if the temperature is higher than 160°C, the polyether chain and the obtained graft polymer may be thermally decomposed.

### 1.2.3 Method for obtaining oxazoline group-containing water-soluble polymer compound by reacting polymer having carboxyl group and/or ester group with amino alcohol

Specific examples of the polymer having a carboxyl group and/or an ester group include an acrylic acid polymer, a methacrylic acid polymer, an acrylic acid ester polymer, a methacrylic acid ester polymer, and copolymers thereof. Other carboxyl group-containing monomers include dicarboxylic acids such as maleic acid, fumaric acid, and itaconic acid.

Acrylic acid esters include, for example, acrylic acid methyl ester, acrylic acid ethyl ester, acrylic acid n-propyl ester, acrylic acid isopropyl ester, acrylic acid n-butyl ester, acrylic acid isobutyl ester, acrylic acid t-butyl ester, and acrylic acid 2-ethylhexyl ester.

Methacrylic acid esters include methacrylic acid methyl ester, methacrylic acid ethyl ester, methacrylic acid n-propyl ester, methacrylic acid isopropyl ester, methacrylic acid n-butyl ester, methacrylic acid isobutyl ester, methacrylic acid t-butyl ester, methacrylic acid 2-ethylhexyl ester, and the like.

Specific examples of the amino alcohol include ethanolamine, 2-amino-1-propanol, 3-amino-2-propanol, 3-amino-2-butanol, 2-amino-2-phenyl-ethanol, and 2-amino-3-phenyl-butanol.

When a polymer having a carboxyl group and/or an ester group is reacted with an amino alcohol, the reaction can be carried out without a catalyst, but a method using a transition metal compound (for example, a zinc-based compound, a cadmium-based compound, or the like) as a catalyst for the purpose of increasing the reaction yield may be used.

The reaction conditions may employ any suitable conditions. For example, it may be performed in any suitable solvent. Alternatively, a polymer having a carboxyl group and/or an ester group may be introduced into a twin-screw extruder to melt the polymer, and a solution of an amino alcohol and a transition metal compound may be added to react the carboxyl group and/or the ester group with aminoethanol in the absence of a solvent.

Examples of solvent include aromatic solvents such as toluene, xylene, and chlorobenzene, ester-based solvents such as butyl acetate and ethyl acetate, and ketone-based solvents such as methyl ethyl ketone, methyl isobutyl ketone, and cyclohexanone.

The reaction temperature of the above reaction is preferably 80 to 180°C, more preferably 100 to 175°C, and most preferably 150 to 170°C. The reaction temperature is set in consideration of the type and quantity of the solvent to be used.

The ratio of the structural unit derived from the oxazoline group-containing monomer in the oxazoline group-containing water-soluble polymer compound is defined as the oxazoline group content (mmol/g·solid content), and the preferred range of the oxazoline group content is 0.1 to 20.0mmol/g·solid content, more preferably 0.2 to 10.0mmol/g·solid content. Here, the oxazoline group content (mmol/g·solid content) represents mmol numbers of the structural unit derived from the oxazoline group-containing monomer per 1g of the oxazoline group-containing water-soluble polymer compound. The method for calculating the oxazoline group content is a theoretical value in which the reaction rate of the charged monomer is 100%.

The weight average molecular weight of the oxazoline group-containing water-soluble polymer compound is usually in the range of 1000 to 1000000, and preferably in the range of 5000 to 500000. The weight average molecular weight of the oxazoline group-containing water-soluble polymer compound can be determined by gel permeation chromatography (GPC).

The content of the oxazoline group-containing water-soluble polymer compound in the polishing composition is usually 0.001 to 5.0 % by mass, preferably 0.01 to 3.0 % by mass.

### 1.3 Dispersant

A dispersant may be added to the polishing composition of the present invention as needed. The dispersant is at least one selected from the group consisting of alumina sols, celluloses, and condensed phosphates.

Since it is necessary to prevent the alumina particles in the polishing composition from settling over time or upon standing, and from the viewpoint of handling of the polishing composition, it is desirable to easily redisperse the alumina particles even when the alumina particles settle during long-term storage. For this reason, a dispersant is blended into the polishing composition.

The alumina sol is obtained by dispersing aluminum hydroxide or hydrated alumina in an aqueous solution in a colloidal state. The hydrated alumina can include boehmite, pseudo-boehmite, diaspore, gibbsite, bayerite, and the like.

As the alumina sol in which aluminum hydroxide is dispersed in an aqueous solution in a colloidal state, it is preferable to use a sol product of an aluminum salt. The sol product of the aluminum salt is obtained by the reaction of various aluminum salts with a compound which easily reacts with water and generates a hydroxyl group. It can also be obtained by the reaction of various aluminum salts with a compound containing hydroxyl groups.

Examples of the various aluminum salts to be used include aluminum sulfate, aluminum chloride, and aluminum nitrate. Examples of the compound to be used which easily reacts with water and generates a hydroxyl group include ammonia, an alkylamine, an amine-based chelate compound, an aminocarboxylic acid, an aminocarboxylic acid-based chelate compound, and an aminophosphonic acid-based chelate compound. Examples of the compound to be used which contains a hydroxyl group include sodium hydroxide and potassium hydroxide.

As the alumina sol in which hydrated alumina is dispersed in an aqueous solution in a colloidal state, boehmite sol is preferably used. The boehmite sol is obtained by allowing boehmite or pseudo-boehmite to coexist with various aluminum salts, inorganic acids, organic acids, and the like. Examples of the various aluminum salts to be used include aluminum sulfate, aluminum chloride, and aluminum nitrate. Examples of the inorganic acids to be used include nitric acid, and hydrochloric acid. Examples of the organic acid to be used include acetic acid and gluconic acid.

Examples of the celluloses include cellulose, methyl cellulose, ethyl cellulose, carboxymethyl cellulose, hydroxyethyl cellulose, and hydroxypropyl cellulose.

Examples of the condensed phosphates include sodium hexametaphosphate, sodium pyrophosphate, potassium pyrophosphate, sodium tripolyphosphate, acidic sodium metaphosphate, and acidic sodium pyrophosphate. Among these dispersants, an alumina sol is preferably used.

The content of the dispersant in the polishing composition is preferably 0.01 to 5.00% by mass, more preferably 0.02 to 2.00% by mass. If the content is less than 0.01% by mass, the dispersing effect of the alumina particles decreases. If the content exceeds 5% by mass, there is a concern that the viscosity of the polishing composition increases and the fluidity of the polishing composition decreases.

### 1.4 Water

The water used in the present invention is preferably water from which impurities have been removed, such as distilled water or ion-exchanged water. Since water has a function of controlling the fluidity of the polishing composition, the content thereof can be appropriately determined in accordance with the target polishing characteristics such as a polishing rate. For example, the content ratio of water is preferably 40 to 90% by mass. When the water content is less than 40% by mass of the polishing composition, the viscosity of the polishing composition increases, and the fluidity may be impaired. On the other hand, when the water content exceeds 90% by mass, the abrasive grain concentration becomes low, and a sufficient polishing rate may not be obtained in some cases.

### 2. Physical property

The pH at 25°C of the polishing composition of the present invention is preferably in the range of 1.0 to 10.0, more preferably in the range of 2.0 to 7.0**.** When the pH at 25°C is less than 1.0**,** corrosion of the polishing machine, pipes, and the like may be likely to occur. When the pH at 25°C exceeds 10.0, the surface roughness of the polished plastic lenses may deteriorate. As described above, in the polishing composition of the present embodiment, pH adjusting agents such as acids, bases and salts thereof can be used in order to adjust pH of the polishing composition to a preferable range.

### 3. Polishing method for Plastic lens

Polishing of the plastic lens is usually performed using a polishing machine for curved surface polishing designed for performing polishing in accordance with the curvature of the lens surface. However, since the polishing performance of the polishing composition can also be evaluated by using a polishing machine for flat surface polishing for a flat plastic lens material, polishing performance evaluation of the polishing composition of the present invention was performed as follows using a polishing machine for flat surface polishing.

A predetermined amount of the polishing composition is charged into a supply container provided in the polishing machine. Then, the surface of the polishing target is polished by pressing the polishing surface of the polishing target against the surface of the polishing pad and rotating a surface plate at a predetermined rotational speed while the polishing composition is dropped and supplied from the supply container to the polishing pad attached onto the surface plate of the polishing machine via a nozzle or a tube. As the polishing pad, any type of suede type, nonwoven type, and other types can be used. As the surface shape of the polishing pad, any of the polishing pads having grooves and no grooves can be used.

### Examples

Hereinafter, the polishing composition of the present invention will be further described based on Examples shown below, but the present invention is not limited to these Examples. In addition to the following Example, various modifications and improvements can be made to the present invention based on the knowledge of those skilled in the art without departing from the spirit of the present invention.

The polishing compositions prepared as Examples 1 to 13 and Comparative Examples 1 to 9 each contain the materials listed in Table 1, shown below, in the amounts listed in Table 1. Further, the results of various polishing tests (detailed later) using these polishing compositions of Examples 1 to 13 and Comparative Examples 1 to 9 are shown in Tables 2 and 3.

Table 2 shows the polishing test results when a low refractive index substrate (CR-39) is used as the polishing target, while Table 3 shows the test results when a high refractive index substrate (MR-10) is used as the polishing target.

The following two types of oxazoline group-containing water-soluble polymer compounds are used in Examples.
·EPOCROS WS-500 (manufactured by Nippon Shokubai Co., Ltd., polymer main chain = acrylic, all of R₁ to R₄ of the oxazoline group in Chem.1 are H, the amount of oxazoline group = 4.5mmol/g·solid content, and weight-average molecular weight = 70000)
·EPOCROS WS-700 (manufactured by Nippon Shokubai Co., Ltd., polymer main chain = acrylic, all of R₁ to R₄ of the oxazoline group in Chem.1 are H, the amount of oxazoline group = 4.5mmol/g·solid content, and weight-average molecular weight = 40000)

The polyvinyl alcohol used in Comparative Examples is as follows.
·JP-18 (manufactured by Japan VAM & POVAL Co., Ltd., saponification degree = 88%, polymerization degree = 1800, and all of R₁ to R₄ of the oxazoline group in Chem.1 are H)

### [Table 1]

**[Table 1]**

| | Materials used | Content in the polishig composition | Experimental examples |
|---|---|---|---|
| Alumina | α-alumina, average particle diameter (D50) = 1.7µm | 17% by mass | Examples 1 to 4, 6 to 8, 9 to 12 Comparative Examples 1 to 4, 6, 7, and 9 |
| | α-alumina, average particle diameter (D50) = 0.7µm | 17% by mass | Examples 5 and 13 Comparative Examples 5 and 8 |
| Dispersant | Alumina sol | 0.48% by mass | Examples 1 to 13 Comparative Examples 1 to 9 |
| Water-soluble macromolecular compounds | EPOCROS WS-500 (oxazoline group-containing polymer) manufactured by Nippon Shokubai Co., Ltd., Polymer main chain = acrylic, all of R1 to R4 of the oxazoline group (1) are H, | 0.2% by mass | Examples 1 to 9 |
| | | 0.4% by mass | Examples 2, 5 to 8, 10 and 13 |
| | Oxazoline group amount = 4.5mmol/g·solid content, MW=70000 | | |
| | EPOCROS WS-700 (oxazoline group-containing polymer) manufactured by Nippon Shokubai Co., Ltd., Polymer main chain = acrylic, all of R1 to R4 of the oxazoline group (1) are H, | 0.2% by mass | Examples 3 and 11 |
| | | 0.4% by mass | Examples 4 and 12 |
| | Oxazoline group amount = 4.5mmol/g·solid content, MW=40000 | | |
| | JP-18 (polyvinyl alcohol) manufactured by Japan VAM & POVAL Co., Ltd. | 0.4% by mass | Comparative Examples 6 and 9 |
| | Saponification degree = 88% | | |
| | Polymerization degree = 1800 | | |
| pH adjuster | Citric acid | 0.1% by mass | Example 6 Comparative Example 2 |
| | Aluminum nitrate | 2.76% by mass (Amount required for pH3.5 in Comparative Example 1) | Examples 1 to 6, 9 to 13 Comparative Examples 1, 2, 5 to 9 |
| | Sodium hydroxide | Amount to make polishing composition to be pH=10.0 | Example 8 Comparative Example 4 |

### 4. Preparation method of Polishing composition

### 4.1 Preparation of Polishing composition of Example 1

Commercially available α-alumina (average particle size (D50)=1.7µm), a commercially available alumina sol, aluminum nitrate, and EPOCROS WS-500 (weight-average molecular weight=70000) as a water-soluble polymer compound were added while being diluted with pure water so as to have the concentration listed in Table 1, and the mixture homogenized by stirring and mixing was used as the polishing composition of Example 1 in a polishing test. The results of the polishing tests with the polishing composition of Example 1 are shown in Table 2.

### 4.2 Preparation of Polishing composition of Example 2

The polishing composition of Example 2 was prepared in the same manner as in Example 1, except that the content of EPOCROS WS-500 used in the preparation of the polishing composition of Example 1 was changed to the amounts listed in Table 1, and was used in the polishing test. The results of the polishing test with the polishing composition of Example 2 are shown in Table 2.

### 4.3 Preparation of Polishing composition of Example 3

The polishing composition of Example 3 was prepared in the same manner as in Example 1, except that the water-soluble polymer compound was changed to EPOCROS WS-700 (weight-average molecular weight=40000) in the preparation of the polishing composition of Example 1, and was used in the polishing test. The results of the polishing test with the polishing composition of Example 3 are shown in Table 2.

### 4.4 Preparation of Polishing composition of Example 4

The polishing composition of Example 4 was prepared in the same manner as Example 3, except that the content of EPOCROS WS-700 used in the preparation of the polishing composition of Example 3 was changed to the amounts listed in Table 1, and was used for the polishing test. The results of the polishing test with the polishing composition of Example 4 are shown in Table 2.

### 4.5 Preparation of Polishing composition of Example 5

The polishing composition of Example 5 was prepared in the same manner as in Example 2, except that the alumina used in the preparation of the polishing composition of Example 2 was changed to α-alumina (average particle size (D50)=0.7um), and was used in the polishing test. The results of the polishing test with the polishing composition of Example 5 are shown in Table 2.

### 4.6 Preparation of Polishing composition of Example 6

The polishing composition of Example 6 was prepared in the same manner as Example 2, except that 0.1% by mass of citric acid was added so that the pH value at 25°C was 2.0 in the preparation of the polishing composition of Example 2, and was used in the polishing test. The results of the polishing test with the polishing composition of Example 6 are shown in Table 2.

### 4.7 Preparation of Polishing composition of Example 7

The polishing composition of Example 7 was prepared in the same manner as Example 2, except that it was prepared without using aluminum nitrate so that the pH value at 25°C was 7.5 in the preparation of the polishing composition of Example 2, and was used in the polishing test. The results of the polishing test with the polishing composition of Example 7 are shown in Table 2.

### 4.8 Preparation of Polishing composition of Example 8

The polishing composition of Example 8 was prepared in the same manner as in Example 2, except that sodium hydroxide was added so that the pH value at 25°C was 10.0 in the preparation of the polishing composition of Example 2, and was used in the polishing test. The results of the polishing test with the polishing composition of Example 8 are shown in Table 2.

### 4.9 Preparation of Polishing composition of Example 9

A polishing composition was prepared in the same manner as in Example 1 and used in the polishing test of Example 9. The results of the polishing test with the polishing composition of Example 9 are shown in Table 3.

### 4.10 Preparation of Polishing composition of Example 10

A polishing composition was prepared in the same manner as in Example 2 and used in the polishing test of Example 10. The results of the polishing test with the polishing composition of Example 10 are shown in Table 3.

### 4.11 Preparation of Polishing composition of Example 11

A polishing composition was prepared in the same manner as in Example 3 and used in the polishing test of Example 11. The results of the polishing test with the polishing composition of Example 11 are shown in Table 3.

### 4.12 Preparation of Polishing composition of Example 12

A polishing composition was prepared in the same manner as in Example 4 and used in the polishing test of Example 12. The results of the polishing test with the polishing composition of Example 12 are shown in Table 3.

### 4.13 Preparation of Polishing composition of Example 13

A polishing composition was prepared in the same manner as in Example 5 and used in the polishing test of Example 13. The results of the polishing tests with the polishing compositions of Example 13 are shown in Table 3.

### 4.14 Preparation of Polishing composition of Comparative Example 1

The polishing composition of Comparative Example 1 was prepared in the same manner as in Example 1, except that no water-soluble polymer compound was used in the preparation of the polishing composition of Example 1, and was used in the polishing test. The results of the polishing test using the polishing composition of Comparative Example 1 are shown in Table 2.

### 4.15 Preparation of Polishing composition of Comparative Example 2

The polishing composition of Comparative Example 2 was prepared in the same manner as in Example 6, except that no water-soluble polymer compound was used in the preparation of the polishing composition of Example 6, and was used in the polishing test. The results of the polishing test using the polishing composition of Comparative Example 2 are shown in Table 2.

### 4.16 Preparation of Polishing composition of Comparative Example 3

The polishing composition of Comparative Example 3 was prepared in the same manner as in Example 7, except that no water-soluble polymer compound was used in the preparation of the polishing composition of Example 7, and was used in the polishing test. The results of the polishing test using the polishing composition of Comparative Example 3 are shown in Table 2.

### 4.17 Preparation of Polishing composition of Comparative Example 4

The polishing composition of Comparative Example 4 was prepared in the same manner as in Example 8, except that no water-soluble polymer compound was used in the preparation of the polishing composition of Example 8, and was used in the polishing test. The results of the polishing test using the polishing composition of Comparative Example 4 are shown in Table 2.

### 4.18 Preparation of Polishing composition of Comparative Example 5

The polishing composition of Comparative Example 5 was prepared in the same manner as in Example 5, except that no water-soluble polymer compound was used in the preparation of the polishing composition of Example 5, and was used in the polishing test. The results of the polishing test using the polishing composition of Comparative Example 5 are shown in Table 2.

### 4.19 Preparation of Polishing composition of Comparative Example 6

The polishing composition of Comparative Example 6 was prepared in the same manner as in Example 2, except that the water-soluble polymer compound was changed to JP-18 manufactured by Japan VAM & POVAL Co., Ltd. in the preparation of the polishing composition of Example 2, and was used in the polishing test. The results of the polishing test using the polishing composition of Comparative Example 6 are shown in Table 2.

### 4.20 Preparation of Polishing composition of Comparative Example 7

The polishing composition of Comparative Example 7 was prepared in the same manner as in Example 10, except that no water-soluble polymer compound was used in the preparation of the polishing composition of Example 10, and was used in the polishing test. The results of the polishing test using the polishing composition of Comparative Example 7 are shown in Table 3.

### 4.21 Preparation of Polishing composition of Comparative Example 8

The polishing composition of Comparative Example 8 was prepared in the same manner as in Example 10, except that no water-soluble polymer compound was used in the preparation of the polishing composition of Example 13, and was used in the polishing test. The results of the polishing test using the polishing composition of Comparative Example 8 are shown in Table 3.

### 4.22 Preparation of Polishing composition of Comparative Example 9

The polishing composition of Comparative Example 9 was prepared in the same manner as in Example 10, except that the water-soluble polymer compound was changed to JP-18 in the preparation of the polishing composition of Example 10, and was used in the polishing test. The results of the polishing test using the polishing composition of Comparative Example 9 are shown in Table 3.

### 5. Particle size of Alumina

The average particle size of the alumina used in the present invention was measured using a laser diffraction particle size distribution analyzer (SALD2200, manufactured by Shimadzu Corporation). The average particle size of alumina is an average particle size (D50) at which the accumulated particle size distribution from the small particle size side is 50% based on volume.

### 6. Polishing conditions

Polishing machine Single-side polishing machine surface plate diameter 350mm
Substrate High refractive index substrate (MR-10) circular shape with 75mm diameter
   Low refractive index substrate (CR-39) square shape with sides of 50mm
Polishing pad SUBA600 without groove
Polishing Pressure 160g/cm² (High refractive index substrate)
   200g/cm² (Low refractive index substrate)
Surface plate rotating speed 60rpm
Polishing time 8min
Flow rate of polishing agent 25ml/min

### 7. Evaluating polished substrate

### 7.1 Measuring method of Polishing rate

The thickness of the substrate before polishing and the thickness of the substrate after polishing were measured using a micrometer (manufactured by Mitsutoyo Co., Ltd., measuring accuracy: 1 µm), and the polishing rate (µm /min) was thereby measured. Since three substrates to be polished were simultaneously polished for each of the polishing compositions such as Examples and Comparative Examples, the polishing rate is an average value of the three polishing compositions.

### 7.2 Appearance (haze) evaluation method of Substrate surface after polishing

The hazes on the surface of the substrate after polishing were visually determined by applying light of a condenser lamp (ECO LIGHT, manufactured by Nagata Seisakusho Co., Ltd., 30000 LuX) to the surface of the substrate and observing the reflected light, based on the following evaluation conditions. It should be noted that the determination indicates an overall determination of three substrate polished at the same time.

### 7.3 Haze evaluation conditions

Good: No haze
Slightly bad: With hazes on a part
Bad: With hazes on the entire surface

### 7.4 Measuring method of Surface roughness (Ra) of Substrate after polishing

The surface roughness (Ra) of the substrate after polishing was measured using 3D measuring laser microscope (manufactured by OLYMPUS Corporation). The measurement was performed using a measuring device (OLS4100, manufactured by OLYMPUS Corporation, measurement magnification: 2160 times) without a cutoff, and a measurement area of 128µm×128µm.

The results of polishing low refractive index substrate using the polishing compositions of Examples 1 to 13 and Comparative Examples 1 to 9 are shown in Table 2 and the results of polishing high refractive index substrate are shown in Table 3, respectively.

### [Table 2]

**[Table 2]**

| Experiment number | Alumina | | Water-soluble polymer compound | | Dispersant | |
|---|---|---|---|---|---|---|
| | Crystal | Average particle size D50 [µm] | Type | Content [% by mass] | Type | Content [% by mass] |
| Example 1 | α | 1.7 | EPOCROS WS-500 manufactured by Nippon Shokubai Co., Ltd. MW=70000 | 0.2 | Alumina sol | 0.48 |
| Example 2 | α | 1.7 | EPOCROS WS-500 manufactured by Nippon Shokubai Co., Ltd. MW=70000 | 0.4 | Alumina sol | 0.48 |
| Example 3 | α | 1.7 | EPOCROS WS-700 manufactured by Nippon Shokubai Co., Ltd. MW=40000 | 0.2 | sol | 0.48 |
| Example 4 | α | 1.7 | EPOCROS WS-700 manufactured by Nippon Shokubai Co., Ltd. MW=40000 | 0.4 | Alumina sol | 0.48 |
| Example 5 | α | 0.7 | EPOCROS WS-500 manufactured by Nippon Shokubai Co., Ltd. MW=70000 | 0.4 | Alumina sol | 0.48 |
| Example 6 | α | 1.7 | EPOCROS WS-500 manufactured by Nippon Shokubai Co., Ltd. MW=70000 | 0.4 | Alumina sol | 0.48 |
| Example 7 | α | 1.7 | EPOCROS WS-500 manufactured by Nippon Shokubai Co., Ltd. MW=70000 | 0.4 | sol | **0.48** |
| Example 8 | α | 1.7 | EPOCROS WS-500 manufactured by Nippon Shokubai Co., Ltd. MW=70000 | 0.4 | Alumina sol | 0.48 |
| Comparative Example 1 | α | 1.7 | - | - | Alumina sol | 0.48 |
| Comparative Example 2 | α | 1.7 | - | - | Alumina sol | 0.48 |
| Comparative Example 3 | α | 1.7 | - | - | Alumina sol | 0.48 |
| Comparative Example 4 | α | 1.7 | - | - | Alumina sol | 0.48 |
| Comparative Example 5 | α | 0.7 | - | - | Alumina sol | 0.48 |
| Comparative Example 6 | α | 1.7 | JP-18 manufactured by Japan VAM & POVAL Co., Ltd. | 0.4 | Alumina sol | 0.48 |
| | | | Saponification degree = 88% | | | |
| | | | After polymerization = 1800 | | | |

**[Table 2 Continued]**

| Experiment number | pH adjuster | | pH (25°C) | Polishing rate [µm/min] | Appearance (haze) | Surface roughness (Ra) |
|---|---|---|---|---|---|---|
| | Type | Content | | | | |
| | | [% by mass] | | | (Good/ Slightly bad/Bad) | [nm] |
| Example 1 | Aluminum nitrate | 2.76 | 3.5 | 6.7 | Good | 11.0 |
| Example 2 | Aluminum nitrate | 2.76 | 3.5 | 7.1 | Good | 11.2 |
| Example 3 | Aluminum nitrate | 2.76 | 3.5 | 5.8 | Good | 11.3 |
| Example 4 | Aluminum nitrate | 2.76 | 3.5 | 6.2 | Good | 11.2 |
| Example 5 | Aluminum nitrate | 2.76 | 3.5 | 4.4 | Good | 6.1 |
| Example 6 | Aluminum nitrate | 2.76 | 2.0 | 6.3 | Good | 12.2 |
| | Citric acid | 0.1 | | | | |
| Example 7 | - | - | 7.5 | 6.3 | Good | 13.6 |
| Example 8 | NaOH | Amount to make polishing composition to be pH=10.0 | 10.0 | 6.6 | Good | 13.0 |
| Comparative Example 1 | Aluminum nitrate | 2.76 | 3.5 | 4.5 | Good | 11.2 |
| Comparative Example 2 | Aluminum nitrate | 2.76 | 2.0 | 3.2 | Good | 11.7 |
| | Citric acid | 0.1 | | | | |
| Comparative Example 3 | - | - | 7.5 | 5.2 | Good | 13.6 |
| Comparative Example 4 | NaOH | Amount to make polishing composition to be pH=10.0 | 10.0 | 5.5 | Good | 13.1 |
| Comparative Example 5 | Aluminum nitrate | 2.76 | 3.5 | 1.9 | Good | 6.1 |
| Comparative Example 6 | Aluminum nitrate | 2.76 | 3.5 | 4.3 | Good | 11.0 |

### [Table 3]

**[Table 3]**

| Experiment number | Alumina | | Water-soluble polymer compound | | Dispersant | |
|---|---|---|---|---|---|---|
| | Crystal | Average particle size D50 [µm] | Type | Content | Type | Content |
| | | | | [% by mass] | | [% by mass] |
| Example 9 | α | 1.7 | EPOCROS WS-500 manufactured by Nippon Shokubai Co., Ltd. MW=70000 | 0.2 | Alumina sol | 0.48 |
| Example 10 | α | 1.7 | EPOCROS WS-500 manufactured by Nippon Shokubai Co., Ltd. MW=70000 | 0.4 | Alumina sol | 0.48 |
| Example 11 | α | 1.7 | EPOCROS WS-700 manufactured by Nippon Shokubai Co., Ltd. MW=40000 | 0.2 | Alumina sol | 0.48 |
| Example 12 | α | 1.7 | EPOCROS WS-700 manufactured by Nippon Shokubai Co., Ltd. MW=40000 | 0.4 | Alumina sol | 0.48 |
| Example 13 | α | 0.7 | EPOCROS WS-500 manufactured by Nippon Shokubai Co., Ltd. MW=70000 | 0.4 | Alumina sol | 0.48 |
| Comparative Example 7 | α | 1.7 | - | - | Alumina sol | 0.48 |
| Comparative Example 8 | α | 0.7 | - | - | Alumina sol | 0.48 |
| Comparative Example 9 | α | 1.7 | JP-18 manufactured by Japan VAM & POVAL Co., Ltd. | 0.4 | Alumina sol | 0.48 |
| | | | Saponification degree = 88% After polymerization = 1800 | | | |

**[Table 3 Continued]**

| Experiment number | pH adjuster | | pH (25°C) | Polishing rate [µm/min] | Appearance (haze) | Surface roughness (Ra) |
|---|---|---|---|---|---|---|
| | Type | Content | | | | |
| | | [% by mass] | | | (Good/ Slightly bad/ Bad) | [nm] |
| Example 9 | Aluminum | 2.76 | 3.5 | 2.70 | Good | 10 |
| Example 10 | Aluminum nitrate | 2.76 | 3.5 | 2.95 | Good | 10.2 |
| Example 11 | Aluminum nitrate | 2.76 | 3.5 | 2.79 | Good | 10.1 |
| Example 12 | Aluminum nitrate | 2.76 | 3.5 | 3.00 | Good | 10.3 |
| Example 13 | Aluminum nitrate | 2.76 | 3.5 | 1.77 | Good | 4.5 |
| Comparative Example 7 | Aluminum nitrate | 2.76 | 3.5 | 1.3 | Good | 10.2 |
| Comparative Example 8 | Aluminum nitrate | 2.76 | 3.5 | 0.8 | Good | 4.5 |
| Comparative Example 9 | Aluminum nitrate | 2.76 | 3.5 | 1.2 | Good | 10.1 |

### 8. Discussion

Firstly, the results of the polishing test for the low refractive index substrate are discussed based on Table 2. Compared to Comparative Examples 1 to 4 using the polishing compositions containing no water-soluble polymer compound using α-alumina with an average particle size (D50) of 1.7µm, Examples 1 to 4 and 6 to 8 using the polishing compositions containing an oxazoline group-containing water-soluble polymer compound using the same alumina showed improved polishing rate.

More specifically, compared to Comparative Example 2 in which the pH value at 25°C of the polishing composition was 2.0, Example 6 having the same pH value of the polishing composition showed a polishing rate of about 2 times. In addition, compared to Comparative Example 1 in which the pH value at 25°C of the polishing composition was 3.5, Example 2 having the same pH value of the polishing composition showed a polishing rate of about 1.6 times. Further, compared to Comparative Example 3 in which the pH value at 25°C of the polishing composition was 7.5, Example 7 having the same pH value of the polishing composition showed a polishing rate of about 1.2 times. In addition, compared to Comparative Example 4 in which the pH value at 25°C of the polishing composition was 10.0, Example 8 having the same pH value of the polishing composition showed a polishing rate of 1.2 times.

In Comparative Example 6 using the polishing composition obtained by adding commercially available polyvinyl alcohol (saponification degree=88%, polymerization degree=1800) to the polishing composition of Comparative Example 1, the polishing rate was not improved with respect to Comparative Example 1. For the surface roughness of the substrate after polishing, Example 2 and Example 6 in which the pH value at 25°C of the polishing composition is in the acidic range has a better results than Example 7 and Example 8 in which the pH value at 25°C of the polishing composition is neutral to alkaline.

Compared to Comparative Example 5 using the polishing composition containing no water-soluble polymer compound using α-alumina having an average particle size (D50) of 0.7um, Example 5 using the polishing composition containing an oxazoline group-containing polymer using a similar alumina showed a polishing rate of about 2.3 times.

Example 1 shows the results of the polishing test using the polishing composition in which the content of an oxazoline group-containing water-soluble polymer compound differs from that of Example 2. Example 3 and Example 4 show the results of the polishing tests using the polishing compositions containing oxazoline group-containing water-soluble polymer compounds having weight-average molecular weights differing from those of Example 1 and Example 2.

Then, the results of the polishing test for the high refractive index substrate are discussed based on Table 3. Compared to Comparative Example 7 using the polishing composition containing no water-soluble polymer compound using α-alumina having an average particle size (D50) of 1.7µm, Example 9 to 12 using the polishing compositions containing an oxazoline group-containing polymer using the same alumina showed improved polishing rate. More specifically, compared to Comparative Example 7 using the polishing composition containing no water-soluble polymer compound, Example 10 had an improved polishing rate of about 2.3 times. On the other hand, in Comparative Example 9 using the polishing composition obtained by adding commercially available polyvinyl alcohol (saponification degree=88%, polymerization degree=1800) to the polishing composition of Comparative Example 7, the polishing rate was not improved compared to Comparative Example 7.

Compared to Comparative Example 8 using the polishing composition containing no water-soluble polymer compound using α-alumina having an average particle size (D50) of 0.7um, Example 13 using the polishing composition containing an oxazoline group-containing water-soluble polymer compound using the same alumina had an improved polishing rate of about 2.2 times.

Example 9 shows the results of the polishing test using the polishing composition in which the content of an oxazoline group-containing water-soluble polymer compound differs from that of Example 10. Example 11 and Example 12 show the results of the polishing tests using the polishing compositions containing oxazoline group-containing water-soluble polymer compounds having weight-average molecular weights differing from those of Example 9 and 10.

From the above, it is clear that in both polishing of low refractive index substrate and polishing of high refractive index substrate, the polishing rate is improved while maintaining surface roughness and appearance of the substrate after polishing, since the polishing composition contains the oxazoline group-containing water-soluble polymer compound.

### Industrial Applicability

The polishing composition of the present invention contributes to efficiently polishing a plastic lens widely used for spectacle lenses and the like and improving surface properties.

## Claims

1. A polishing composition for a plastic lens, comprising
alumina,
a water-soluble polymer compound, and
water,
wherein the water-soluble polymer compound is an oxazoline group-containing water-soluble polymer compound in which an oxazoline group represented by Chemical Formula 1 below is bonded to a main chain of a polymer. 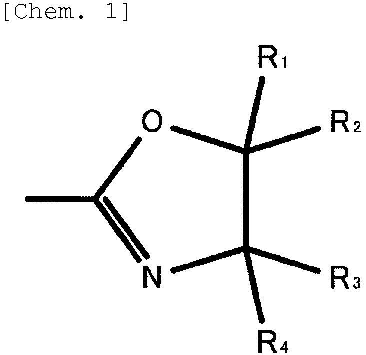 (In Chemical Formula 1, R₁, R₂, R₃, and R₄ are any one of H, CH₃, and CH₂CH₃.)

2. The polishing composition for a plastic lens according to claim 1, wherein the oxazoline group-containing water-soluble polymer compound includes
a structural unit derived from an acrylic monomer and a structural unit derived from an oxazoline group-containing monomer as essential structural units.

3. The polishing composition for a plastic lens according to claim 2, wherein the acrylic monomer is at least one selected from the group consisting of acrylamide, methacrylamide, acrylic acid, acrylic acid salt, acrylic acid ester, methacrylic acid, methacrylic acid salt, and methacrylic acid ester.

4. The polishing composition for a plastic lens according to claim 2, wherein the oxazoline group-containing monomer is at least one selected from the group consisting of:
2-vinyl-2-oxazoline, 2-vinyl-4-methyl-2-oxazoline, 2-vinyl-5-methyl-2-oxazoline, 4,4-dimethyl-2-vinyl-2-oxazoline, 2-isopropenyl-2-oxazoline, 2-isopropenyl-4-methyl-2-oxazoline, 4,4-dimethyl-2-isopropenyl-2-oxazoline, 2-isopropenyl-5-methyl-2-oxazoline, 2-isopropenyl-5-ethyl-2-oxazoline.

5. The polishing composition for a plastic lens according to claim 1, wherein the oxazoline group-containing water-soluble polymer compound is obtained by graft polymerization of an addition-polymerizable oxazoline to a polyether.

6. The polishing composition for a plastic lens according to claim 1, wherein the oxazoline group-containing water-soluble polymer compound is obtained by reacting a polymer having a carboxyl group and/or an ester group with an amino alcohol.

7. The polishing composition for a plastic lens according to any one of claims 1 to 6, further comprising dispersant.

8. The polishing composition for a plastic lens according to any one of claims 1 to 6, wherein the pH at 25° C is 1.0 to 10.0.
